# EUROPÄISCHE PATENTSCHRIFT

(11) **EP 2 327 536 B1**
(45) Veröffentlichungstag und Bekanntmachung des Hinweises auf die Patenterteilung: **22.08.2012**
(21) Anmeldenummer: 10186343.9
(22) Anmeldetag: 04.10.2010
(51) Int. Cl.: B29D 30/42, B29D 30/70, B29C 70/50, B60C 9/02, B60C 9/20

(54) **Verfahren zur Herstellung eines Materialverbundes für eine Gürtellage oder für eine Karkasslage eines Radialluftreifens**
Method for producing a material compound for a belt or a carcass bearing of a radial pneumatic tyre
Procédé de fabrication d'un matériau composite pour bandage de pneus ou pour une nappe carcasse d'un pneu radial

(30) Priorität: 25.11.2009 DE 102009044644
(43) Veröffentlichungstag der Anmeldung: 01.06.2011
(73) Patentinhaber: Continental Reifen Deutschland GmbH, 30165 Hannover (DE)
(72) Erfinder: Wahl, Günter, Dr., 31249 Hohenhameln (DE)
(74) Vertreter: Finger, Karsten

(56) Entgegenhaltungen:
- EP-A2- 1 431 023
- GB-A- 580 838
- US-A- 5 855 703
- US-A1- 2002 046 795
- US-A1- 2009 032 181

## Beschreibung

Die Erfindung betrifft ein Verfahren zur Herstellung eines Festigkeitsträger beinhaltenden Materialverbundes für eine Gürtellage oder eine Karkasslage eines Radialluftreifens, wobei zwei Mischungsbahnen mit einer zwischen ihnen zu positionierenden Festigkeitsträgerbahn durch Kalandrieren zusammengefügt werden. Die Erfindung betrifft ferner einen Fahrzeugluftreifen in Radialbauart mit einem profilierten Laufstreifen, Seitenwänden, Wulstbereichen mit Wulstkernen, einem Gürtelverband mit mehreren Gürtellagen sowie zumindest einer Karkasslage, die um die Wulstkerne verläuft und in den Seitenwänden als Karkasshochschläge endet, wobei die Gürtellagen und die Karkasslagen aus in Gummi eingebetteten Festigkeitsträgern stehen.

Die Gürtellagen in Radialluftreifen bestehen üblicherweise aus in eine Gummimischung eingebetteten, innerhalb jeder Lage parallel zueinander verlaufenden Festigkeitsträgern, insbesondere Stahlkorden. Die Gürtellagen werden aus Mischungsbahnen aus einer Kautschukmischung erstellt, wobei die Mischungsbahnen auf einem Mehrwalzenkalander mit den Festigkeitsträgern verpresst werden, sodass diese beidseitig von je einer Mischungsbahn bedeckt sind. Auf analoge Weise erfolgt die Herstellung der Karkasslagen von Radialreifen, wobei die Festigkeitsträger für PKW-Reifen üblicherweise Bestandteil eines Textilgewebes sind und als Festigkeitsträger in Radialkarkassen von LKW-Reifen üblicherweise Stahlkorde verwendet werden. Die Zusammensetzungen der Einbettungsmischungen sind für die Gürtellagen und die Karkasslagen eines PKW- oder eines LKW-Reifens unterschiedlich, um einen optimalen Verbund der Gürtellagen bzw. Karkasslagen mit den umgebenden Reifenbauteilen sicherzustellen und um die unterschiedlichen Belastungen beim Abrollen bzw. beim Betrieb der Reifen zu berücksichtigen. Die Endabschnitte der Karkasshochschläge sowie die Randabschnitte der Gürtellagen - bei LKW-Reifen vorrangig der breitesten Gürtellagen - unterliegen besonderen Belastungen und Beanspruchungen. Dies erfordert auch eine besondere Auslegung der Einbettungsmischungen, insbesondere hinsichtlich ihrer Rissbeständigkeit, Einreißfestigkeit und Ermüdungsbeständigkeit. Die Einbettungsmischungen sind daher vergleichsweise teuer, was sich auf die Herstellkosten der Reifen entsprechend auswirkt. Beim Einformen der rohen Reifen in die Vulkanisationsform und beim Abrollen der Reifen im Betrieb werden ferner die Karkasskorde vor allem in der sogenannten Korbbogenbereichen - Bereiche, welche die Reifenschultem umfassen - besonders angespannt und neigen dazu, durch die Gummilagen in Richtung Reifeninneres durchzutreten. Um diesen Effekt zu verhindern, ist es bekannt, zwischen der Karkasse und der Innenschicht eine gesonderte Sperrgummilage einzubringen, die jedoch das Reifengewicht erhöht und die Herstellung der Reifen verteuert.

Aus dem Stand der Technik ist die US 2002/046795 A1 bekannt, die u.a. Teile des oben genannten Verfahren zur Herstellung von Fahrzeugreifen offenbart.

Der Erfindung liegt die Aufgabe zugrunde, Gürtellagen und Karkasslagen für Radialluftreifen derart herzustellen und auszuführen, dass bei zumindest gleich großer Haltbarkeit des Reifens eine deutliche Reduktion der Material- und Herstellungskosten erzielbar ist.

Was das Verfahren betrifft wird die gestellte Aufgabe erfindungsgemäß dadurch gelöst, dass eine Mischungsbahn aus mehreren Mischungsstreifen erstellt wird, wobei zumindest einer der Mischungsstreifen aus einer ersten Kautschukmischung und zumindest ein weiterer Mischungsstreifen aus einer zweiten Kautschukmischung besteht, die Mischungsbahn quer bzw. unter einem spitzen Winkel zu ihrer Längserstreckung in gleich große Bahnstücke geschnitten wird, die einzelnen Bahnstücke derart stumpf aneinander gespleißt werden, dass ihre Schnittkanten die Längskanten der nun entstehenden Mischungsbahn bilden, welche mit einer zweiten übereinstimmend ausgeführten Mischungsbahn sowie der Festigkeitsträgerbahn durch Kalandrieren derart verbunden wird, dass gleiche Kautschukmischungen aufeinander positioniert werden, wobei anschließend die gebildete Materialverbundbahn in gleich große Stücke geschnitten wird, welche an ihren ungeschnittenen Kanten zu einer Bahn verbunden werden, in welcher die Mischungsstreifen wie in der ursprünglichen Mischungsbahn verlaufen.

Gemäß der Erfindung weisen Abschnitte von Gürtellagen und/oder Karkasslage(n) besondere Einbettungsmischungen auf, welche derart ausgelegt werden können, dass sie die in diesen Bereichen wichtigen Eigenschaften, wie Rissbeständigkeit, Ermüdungsbeständigkeit oder Penetrationsresistenz aufweisen. Dadurch eröffnet die Erfindung die Möglichkeit, bestimmte Abschnitte der Gürtellagen und der Karkasslagen gezielt zu optimieren und dabei die Material- und Herstellkosten gering zu halten, da im übrigen Bereich der Gürtellagen und Karkasslagen eine kostengünstige Standard-Mischung verwendet werden kann. Das erfindungsgemäße Verfahren eröffnet eine sehr zweckmäßige und in den einzelnen Verfahrensschritten auf automatisierte Weise ablaufende Möglichkeit der Herstellung von rohen Gürtellagen und Karkasslagen mit Abschnitten aus einer optimierten Einbettungsmischung.

Die ursprüngliche Mischungsbahn, welche aus mehreren Mischungsstreifen besteht, kann eine oder mehrere Mischungsstreifen aus einer oder mehreren weiteren Kautschukmischungen aufweisen. Insbesondere kann die Mischungsbahn mit Mischungsstreifen aus drei unterschiedlichen Kautschukmischungen erstellt werden. Es ist daher gemäß der Erfing möglich, in Gürtellagen und Karkasslagen von Fahrzeugluftreifen die Einbettungsmischungen in bestimmten Abschnitten auf besondere Anforderungen gezielt abzustellen.

Bei einer bevorzugten Ausführungsform der Erfindung wird die ursprüngliche Mischungsbahn aus einem mittleren Mischungsstreifen aus der ersten Kautschukmischung und zwei gleich breiten Randstreifen aus der zweiten Kautschukmischung erstellt. Der fertige Materialverbund weist dann ebenfalls zwei Randstreifen aus der zweiten Kautschukmischung und einen mittleren Abschnitt aus der ersten Kautschukmischung auf. Auf diese Weise lassen sich Gürtellagen oder Karkasslagen mit Randstreifen herstellen, in welchen die Einbettungsmischung auf die in diesen Bereichen beim Gebrauch der Reifen wirkenden Belastungen abgestellt ist.

Bei einer weiteren bevorzugten Ausführungsform der Erfindung wird die ursprüngliche Mischungsbahn aus drei Mischungsstreifen aus der ersten Kautschukmischung, zwischen welchen Mischungsstreifen aus einer dritten Kautschukmischung verlaufen, erstellt. Nach dem erfindungsgemäßen Verfahren lassen sich daher auch Abschnitte innerhalb der Karkasslagen oder Gürtellagen mit speziellen Einbettungsmischungen herstellen. Selbstverständlich wird schon bei der Herstellung der ursprünglichen Mischungsbahnen darauf geachtet, dass die Positionen und die Breiten der Mischungsstreifen aus den verschiedenen Kautschukmischungen auf deren erwünschte Positionen im fertigen Reifen abgestimmt sind.

Gemäß der Erfindung ausgeführte Fahrzeugluftreifen können Gürtellagen aufweisen, deren Randabschnitte eine Einbettungsmischung aufweisen, welche sich von der Einbettungsmischung im sonstigen Verlauf der Gürtellagen unterscheidet. Erfindungsgemäß ausgeführte Fahrzeugluftreifen können ferner Karkasslagen mit Endabschnitten in den Hochschlägen aufweisen, deren Einbettungsmischung sich von der bzw. einer Einbettungsmischung im sonstigen Verlauf der Karkasslage unterscheidet. Für die Randabschnitte der Gürtellagen und Karkasslagen werden vor allem Einbettungsmischungen verwendet, die sogenannte High-Performance-Mischungen sind, dies sind Mischungen, welche vor allem hinsichtlich Ermüdungsbeständigkeit, Rissbeständigkeit und Einreißfestigkeit optimiert sind.

Bei einer weiteren vorteilhaften Ausführungsform der Erfindung weist die Karkasslage bzw. weisen die Karkasslagen im Bereich der Korbbögen Abschnitte mit einer besonderen Einbettungsmischung auf. Diese Einbettungsmischung wird insbesondere besonders penetration- und verformungssresistent ausgeführt, um zu verhindern, dass in diesen Bereichen die Korde durch die Gummilagen in Richtung Reifeninneres durchtreten können.

Weitere Merkmale, Vorteile und Einzelheiten der Erfindung werden nun anhand der Zeichnung, welche auf schematische Weise Ausführungsvarianten der Erfindung darstellt, näher beschrieben. Dabei zeigen
Fig. 1 einen radialen Teilschnitt durch einen Fahrzeugluftreifen für Personenkraftwagen,
Fig. 2 einen radialen Querschnitt durch einen Fahrzeugluftreifen für Lastkraftwagen,
Fig. 3 bis Fig. 5 Ansichten einiger Schritte bei der Herstellung einer gummierten Kordlage eines Fahrzeugluftreifens,
Fig. 3a ein Detail der Fig. 3 mit einer anderen Ausführungsvariante und
Fig. 6 bis Fig. 8 Ansichten einiger Schritte bei der Herstellung einer Gürtellage eines Fahrzeugluftreifens.

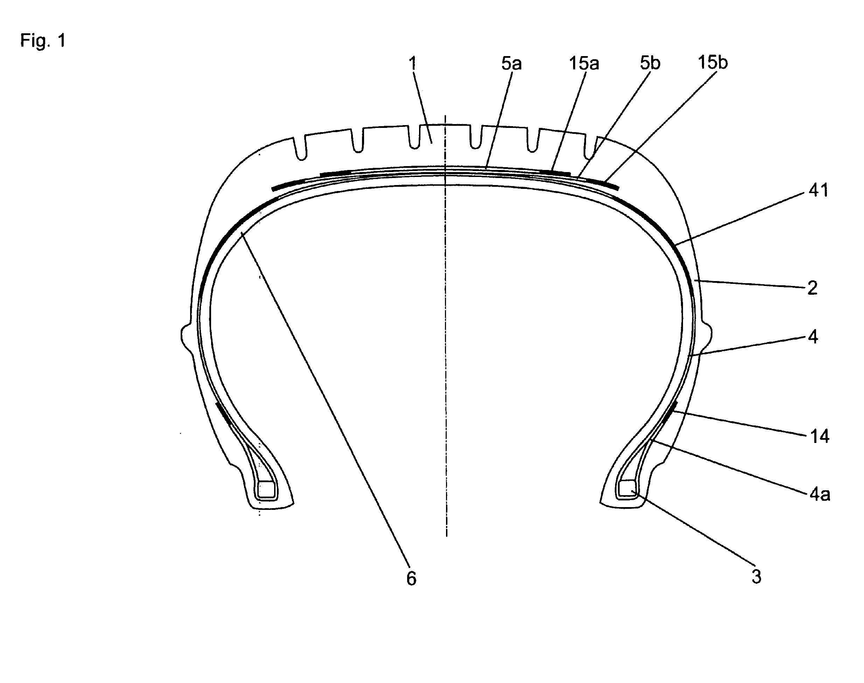

Der in Fig. 1 schematisch gezeigte Radialluftreifen für Personenkraftwagen (PKW-Reifen) weist die üblichen Reifenbauteile, wie einen profilierten Laufstreifen 1, Seitenwände 2, Wulstbereiche mit Wulstkernen 3, eine luftdichte Innenschicht 6, eine Karkasslage 4 und einen Gürtelverband mit zwei Gürtellagen 5a, 5b auf. Die Festigkeitsträger in der Karkasslage 4 sind in Gummi eingebettet und Bestandteile eines Gewebes. Die beiden freien, von axial innen nach axial außen um die Wulstkerne 3 geschlungenen Endabschnitte der Karkasslage 4 bilden die Karkasshochschläge 4a. Die beiden zwischen der Karkasslage 4 und dem Laufstreifen 1 in Umfangsrichtung umlaufenden Gürtellagen 5a, 5b bestehen aus in Gummi eingebetteten und in jeder Lage jeweils zueinander parallel verlaufenden Stahlkorden. Die Fadendichte, die Anzahl der Stahlkorde pro Längeneinheit, welche normal zur Erstreckungsrichtung der Stahlkorde gemessen wird, ist in den beiden Gürtellagen 5a, 5b vorzugsweise gleich groß. Die Stahlkorde in der einen Gürtellage 5a verlaufen zu den Stahlkorden in der anderen Gürtellage 5b gekreuzt, der Winkel, den die Stahlkorde mit der Reifenumfangsrichtung einschließen, beträgt in der Größenordnung von ± 15° bis ± 30°.

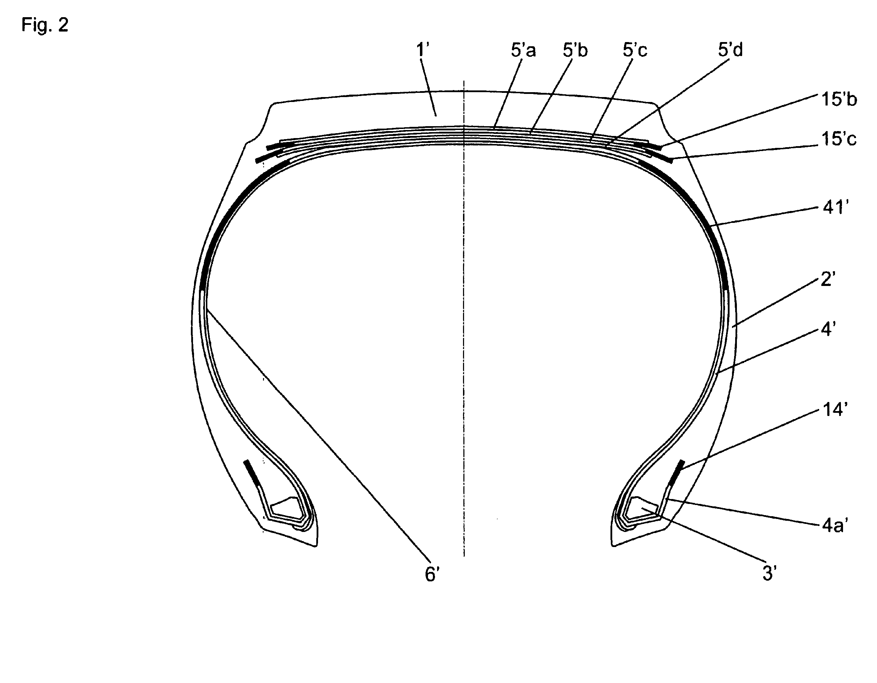

Fig. 2 zeigt einen Radialluftreifen für Lastkraftwagen bzw. Schwerlastfahrzeuge (LKW-Reifen) mit einem profilierten Laufstreifen 1', Seitenwänden 2', einer luftdichten Innenschicht 6', Wulstbereichen mit Wulstkernen 3', zumindest einer Karkasslage 4' mit Hochschlägen 4'a und einem vierlagigen Gürtelverband mit vier Gürtellagen 5'a, 5'b, 5'c und 5'd. Eine Karkasslage 4' eines LKW-Reifens besteht üblicherweise aus in Gummi eingebetteten, zumindest im Wesentlichen in radialer Richtung verlaufenden Festigkeitsträgern aus Stahlkord. Fig. 2 zeigt einen Gürtelverband üblichen Aufbaus, dessen Gürtellagen 5'a, 5'b, 5'c und 5'd aus in Gummi eingebetteten, parallel zueinander verlaufenden Stahlkorden bestehen. Die radial äußerste, vierte Gürtellage 5'a ist die schmalste Gürtellage, die radial innerste, erste Gürtellage 5'd ist etwas breiter ausgeführt als die radial äußerste Gürtellage 5'a, die Gürtellagen 5'b, 5'c sind breiter als die erste Gürtellage 5'd, wobei die zweite Gürtellage 5'c die breiteste Gürtellage des Gürtelverbandes ist. Die Orientierung bzw. Winkelung der Stahlkorde in den einzelnen Gürtellagen 5'a, 5'b, 5'c und 5'd relativ zur Umfangsrichtung kann in üblicher Weise sein, mit einer gekreuzten Anordnung der Stahlkorde in den einander benachbarten Gürtellagen 5'a, 5'b, 5'c und 5'd und unter Winkeln von ± 15° bis ± 65° zur Umfangsrichtung.

Bei PKW- und LKW-Reifen aus dem Stand der Technik sind die Gürtellagen und die Karkasslagen einheitlich ausgebildete Reifenbauteile. Bei gemäß der Erfindung ausgeführten Reifen weist zumindest eine der Gürtellagen und/oder die Karkasslage(n) einen oder mehrere in Reifenumfangsrichtung diesen Bauteil umlaufende(n) Abschnitt(e) konstanter Breite auf, dessen bzw. deren Einbettungsmischung sich von der Einbettungsmischung des/der benachbarten Abschnitte(s) unterschiedet. Fig. 1 und Fig. 2 zeigen besonders vorteilhafte Anordnungen solcher Abschnitte. In Fig. 1 sind die Randabschnitte 15a, 15b der Gürtellagen 5a, 5b, die Endabschnitte 14 der Hochschläge 4a und Abschnitte 41 in den sogenannten Korbbogenbereichen der Karkasslage 4 des PKW-Reifens aus speziellen Gummimischungen hergestellt. Beim LKW-Reifen weisen ebenfalls die Endabschnitte 14' der Hochschläge 4'a, ferner die Randabschnitte 15'b und 15'c der Gürtellagen 5'b und 5'c sowie Abschnitte 41' der Karkasslage 4' in den Korbbogenbereichen besondere Gummimischungen auf. Die Randabschnitte 15a, 15b, 15'b, 15'c der Gürtellagen 5a, 5b, 15b, 15c sowie die Endabschnitte 14, 14' der Karkasslagen 4, 4' sind jeweils aus High-Performance-Mischungen hergestellt, Gummimischungen, die hinsichtlich der relevanten Eigenschaften in diesen Abschnitten, wie Rissbeständigkeit, Einreißwiderstand und Ermüdungsbeständigkeit, optimiert sind. Die Abschnitte 41, 41' in den Korbbogenbereichen weisen spezielle, besonders penetrationsresistente Gummimischungen auf. Die High-Performance-Mischungen werden für LKW-und PKW-Reifen und für Gürtellagen und Karkasslagen jeweils unterschiedlich ausgelegt und unterschieden sich von den penetrationsresistenten Mischungen der Abschnitte 41, 41'. Die Einbettungsgummis außerhalb der End- bzw. Randabschnitte 14, 14', 15a, 15b, 15'b, 15'c und der Abschnitte 41, 41' sind aus kostengünstigeren Gummimischungen hergestellt, die bezüglich der erwähnten Eigenschaften nicht optimiert sind und nachfolgend als Standard-Mischungen bezeichnet sind.

Die aus einer High-Performance-Mischung hergestellten Randabschnitte 15a, 15b der Gürtellagen 5a, 5b des PKW-Reifens weisen eine konstante Breite auf, die zwischen 3 mm und 15 mm, insbesondere bis zu 10 mm, beträgt. Bei LKW-Reifen weisen die aus einer High-Performance-Mischung hergestellten Randabschnitte 15'b, 15'c der Gürtellagen 5'b, 5'c eine Breite zwischen 5 mm und 20 mm, insbesondere bis zu 15 mm, auf. Bei PKW-Reifen erstrecken sich die Endabschnitte 14 des Hochschlages 4a über 5 mm bis 20 mm, insbesondere bis zu 15 mm, bei LKW-Reifen erstrecken sich die Endabschnitte 14' der Hochschläge 4'a über 10 mm bis 30 mm, insbesondere bis zu 20 mm. Die Abschnitte 41, 41' erstrecken sich im Wesentlichen zwischen den Rändern der breitesten Gürtellage und der Stelle mit der größten Querschnittsbreite, gegebenenfalls nur über einen Teil dieses Bereichs.

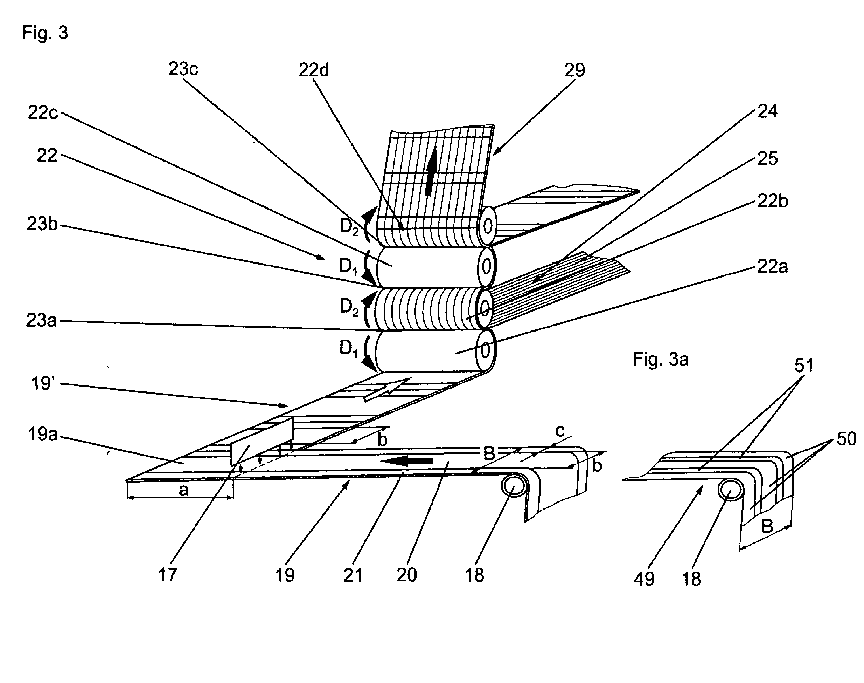

Fig. 3 bis Fig. 5 zeigen beispielhaft die Herstellung eines Materialverbundes 40 in der Form einer Bahn für eine Karkasslage 4 oder 4' mit besonderen Endabschnitten 14a, 14'a.

Wie Fig. 3 zeigt, wird vorerst eine Mischungsbahn 19 einer Gesamtbreite B aus einem Mischungsstreifen 20 der Breite b aus einer Standard-Mischung und zwei Randstreifen 21 der Breite c aus einer High-Performance-Mischung hergestellt. Die aneinandergefügten Mischungsstreifen 20, 21 sind durch Extrusion hergestellte und anschließend gewalzte Gummimischungen. In Fig. 3 wird die bereits fertige Mischungsbahn 19 über eine Walze 18 einer nicht gezeigten Fördereinrichtung, beispielsweise einem Förderband, zugefiihrt, auf diesem abgelegt, zu einem nicht gezeigten Schneidetisch transportiert und hier mittels einer Schneideinrichtung 17, beispielsweise mittels eines Messer, in Bahnstücke 19a einer Länge a geschnitten. Die einzelnen Bahnstücke 19a werden im rechten Winkel zur Förderrichtung der Mischungsbahn 19 weitertransportiert, aneinander stumpf gespleißt und bilden derart eine Mischungsbahn 19', welche sich aus einer Aufeinanderfolge von Mischungsabschnitten der Länge b aus der Standard-Mischung und Abschnitten der Länge 2 x c aus der High-Performance-Mischung zusammensetzt. Die Breite der Mischungsbahn 19' entspricht der Schnittlänge a der Bahnstücke 19a, aus welchem die Bahn zusammengesetzt wird. Die Mischungsbahn 19' wird einem Kalander 22 zugefiihrt, beispielsweise einem Vier-Walzen-Kalander, wie er in Fig. 3 angedeutet ist. Der Kalander 22 weist somit vier drehbar gelagerte Kalanderwalzen, 22a, 22b, 22c, 22d auf, welche derart angeordnet sind, dass zwischen ihnen insgesamt drei Walzenspalte 23a, 23b und 23c gebildet sind. Die Drehrichtungen der einzelnen Kalanderwalzen 22a, 22b, 22c, 22d sind in Fig. 3 durch Pfeile D₁ und D₂ angedeutet. Die Mischungsbahn 19' wird um die erste, unterste Kalanderwalze 22a und in den Spalt 23a zwischen der ersten und der zweiten Kalanderwalze 22a, 22b, anschließend um die zweite Walze 22b in den Walzenspalt 23b zwischen zweiter und dritter Kalanderwalze 22b, 22c und analog um die Walze 22c in den Kalanderspalt 23c zwischen dritter und vierter Kalanderwalze 22c, 22d geführt. In den Walzenspalt 23a wird eine Festigkeitsträgerbahn 24 entgegen der Zufiihrrichtung, jedoch in der Transportrichtung der Mischungsbahn 19' im Spalt 23a, in Fig. 3 daher von rechts, zugefiihrt, und derart im Walzenspalt 23a auf die Mischungsbahn 19' gepresst. Die Festigkeitsträgerbahn 24 weist, wie in Fig. 3 gezeigt, eine Vielzahl von parallel zugeführten Korden 25 - aus textilem Material oder aus Stahl - auf. Im Walzenspalt 23c zwischen den beiden oberen Kalanderwalzen 22c und 22d wird in gleicher Richtung wie die Festigkeitsträgerbahn 24 eine zweite Mischungsbahn 19' synchron zugeführt und auf jene Seite der ersten Mischungsbahn 19' aufgepresst, auf welcher sich die Festigkeitsträgerbahn 24 befindet. Aus dem Kalander 22 tritt somit eine endlose Materialverbundbahn 29, bestehend aus zwei Mischungsbahnen 19' und den zwischen ihnen eingepressten Festigkeitsträgern.

Die zweite Mischungsbahn 19' wird dem Kalanderspalt 23c derart "synchron" zugefiihrt, dass ihre Abschnitte aus der High-Performance-Mischung auf den Abschnitten aus High-Performance-Mischung der ersten Mischungsbahn 19' positioniert werden, sodass sich auch die Abschnitte aus den Standard-Mischungen der beiden Mischungsbahnen 19' aufeinander befinden.

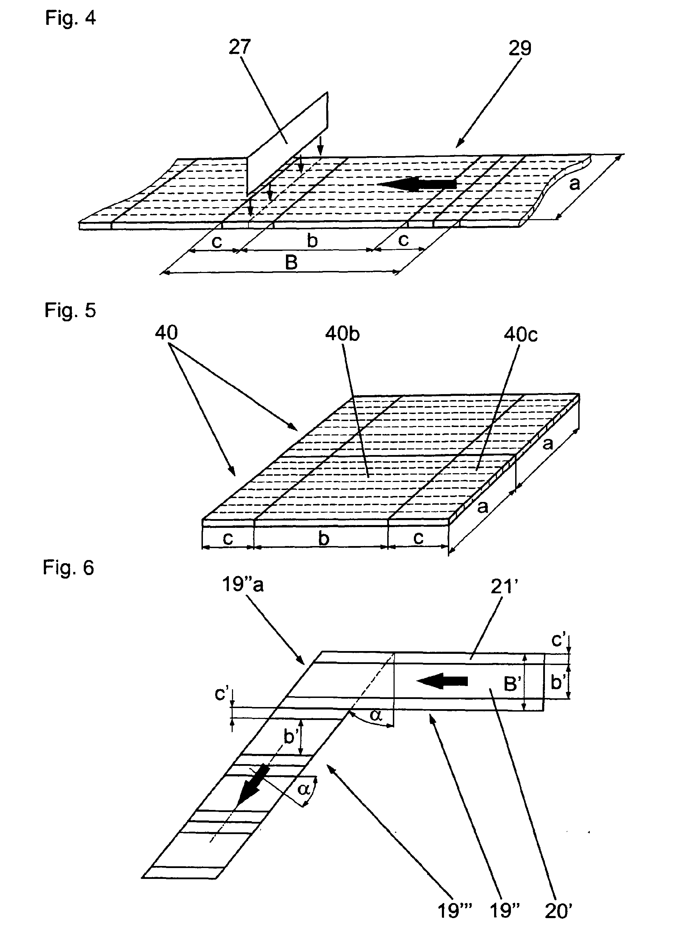

Die Materialverbundbahn 29 wird über nicht gezeigte Fördereinrichtungen einer zweiten Schneideinrichtung 27 zugeführt und durch ein mittiges Durchschneiden der High-Performance-Abschnitte in Materialverbundstücke 40a geschnitten. Jedes Materialverbundstück 40a besteht, wie es Fig. 5 zeigt, aus einem mittleren Abschnitt 40b der Breite b - hier sind die Festigkeitsträger in die Standard-Mischung eingebettet, und zwei Randabschnitten 40c der Breite c, in welchen die Festigkeitsträger in die High-Performance-Mischung eingebettet sind. Die eingebetteten Stahlkorde 25 verlaufen quer zur Erstreckung der Randabschnitte 40c. Mehrere gespleißte Materialverbundstück(e) 40a bilden schließlich einen Materialverbund 40, der beim Reifenaufbau auf die auf einer Reifenaufbautrommel aufgebrachte Innenschichtplatte aufgelegt wird. Im fertig aufgebauten Rohreifen bilden die Randabschnitte 40c die Endabschnitte 14 bzw. 14' der Hochschläge 4a bzw. 4'a. Es werden daher bei der Fertigung der Mischungsbahnen 19 bzw. 19' bereits die erwünschten Abmessungen der Karkasslagen entsprechend berücksichtigt.

Ist beabsichtigt, in den Korbbogenbereichen eine spezielle Gummierung einzusetzen, wird analog vorgegangen. Das Ausgangsmaterial ist, wie Fig. 3a zeigt, eine Mischungsbahn 49 der Breite B, die sich aus fünf Mischungsstreifen und zwar drei Mischungsstreifen 50 aus einer Standard-Mischung und zwei Mischungsstreifen 51 aus einer penetrationsresistenten Mischung zusammensetzt. Selbstverständlich kann unter Verwendung weiterer spezieller Mischungsbahnen eine Karkasslagenbahn mit besonderer Gummierung in den Endabschnitten 14 bzw. 14' hergestellt werden.

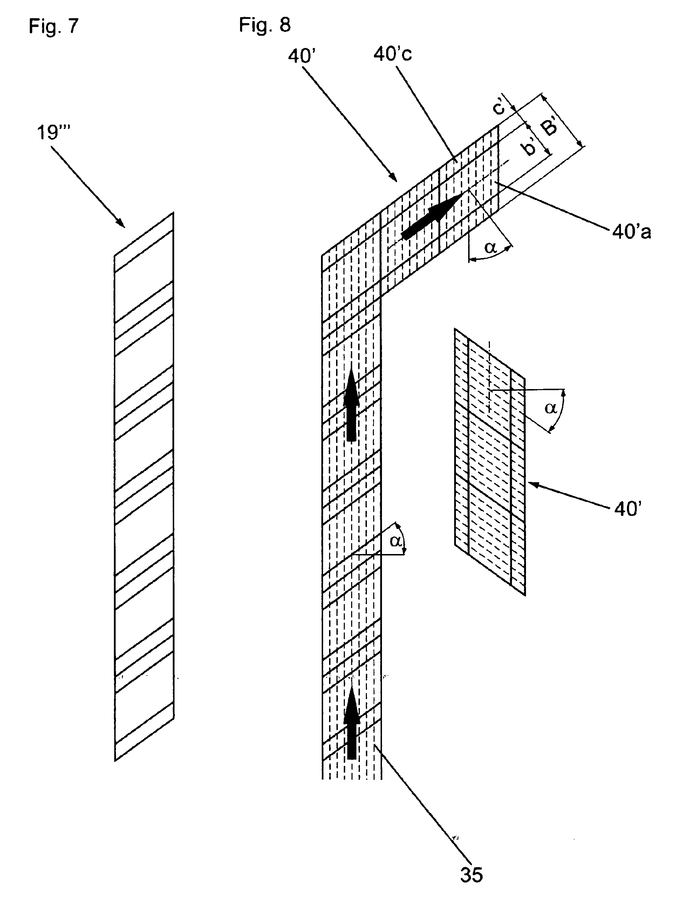

Fig. 6 bis Fig. 8 zeigen schematisch einige Schritte der Herstellung einer Materialverbundbahn 40' für eine Gürtellage gemäß der Erfindung. Die Herstellung der Materialverbundbahn 40' ist weitgehend analog zu jener gemäß Fig. 3 bis Fig. 5. Es wird aus einem Mischungsstreifen 20' einer Breite b' aus einer Standard-Mischung mit zwei Randstreifen 21', welche jeweils die Breite c' aufweisen und aus einer High-Performance-Mischung bestehen, eine Mischungsbahn 19" der Breite B erstellt. Mit einer nicht gezeigten Schneideinrichtung wird die Mischungsbahn 19" in Bahnstücke 19"a einer Länge a' geschnitten, der Schnitt erfolgt unter einem spitzen Winkel α zur Längsrichtung der Mischungsbahn 19". Die Bahnstücke 19"a sind daher in Draufsicht Parallelogramme. Die Bahnstücke 19"a werden anschließend stumpf aneinander gespleißt, sodass eine Mischungsbahn 19"' entsteht, welche, in Längsrichtung betrachtet, abwechselnd aus Abschnitten aus der High-Performance-Mischung und aus Abschnitten aus der Standard-Mischung besteht. Gegenüber der Längserstreckung der Mischungsbahn 19"' sind die Abschnitte unter dem Winkel α geneigt. Aus zwei Mischungsbahnen 19"' und einer nicht dargestellten Festigkeitsträgerbahn aus parallel zueinander zugeführten Korden 35 wird eine Materialverbundbahn 29' auf einem Mehrwalzenkalander, analog zu oben beschrieben, hergestellt. In der Materialverbundbahn 29' verlaufen die Korde 35 in Längsrichtung, wie es in Fig. 8 gezeigt ist. Die Materialverbundbahn 29' wird in Materialverbundstücke 40'a geschnitten, indem mittig zwischen den Abschnitten aus der High-Performance-Mischung unter dem Winkel α zur Querrichtung durchgeschnitten wird. Die Materialverbundstücke 40'a sind in Draufsicht parallelogrammförmig, weisen die Breite B' auf und besitzen Randabschnitte 40'c aus der High-Performance-Mischung, welche die Breite c' aufweisen, und einen mittleren Abschnitt 40'b aus der Standard-Mischung. Die Stahlkorde 35 innerhalb der Materialverbundstücke 40'a verlaufen unter dem Winkel α zur Längserstreckung. Die einzelnen Materialverbundstücke 40'a werden durch stumpfes Spleißen zu einem Materialverbund 40' für Gürtellagen zusammengefügt, welche seitliche Randabschnitte 40'c aus der High-Performance-Mischung aufweisen und in welcher die Stahlkorde 35 unter dem erwähnten Winkel α zur Reifenumfangsrichtung verlaufen. Auch bei der Herstellung von Gürtellagen gilt, dass die Abmessungen der ursprünglichen Mischungsbahn 19" an die erwünschten Abmessungen der Gürtellage anzupassen sind.

Der Herstellungsprozess läuft im Idealfall automatisch oder nahezu automatisch und programmgesteuert ab. Insbesondere ist sicherzustellen, dass beim Kalandrierprozess die beiden die Festigkeitsträger einschließenden Mischungsbahnen derart aufeinander kalandriert werden, dass ihre Mischungsabschnitte mit gleicher Mischung möglichst exakt aufeinander liegen.

Erwähnt sei, dass es dem Fachmann bekannt ist, wie eine High-Performance-Mischung oder eine penetrationsresistente Mischung auszulegen ist. Solche Mischungen beinhalten beispielsweise als Füllstoff, neben Ruß, auch SiO₂ (Silica).

### Bezugsziffernliste

1 Laufstreifen
1' Laufstreifen
2 . Seitenwand
2' Seitenwand
3Wulstkern
3' Wulstkern
4 . Karkasslage
4' Karkasslage
4a Hochschlag
4a Hochschlag
5a Gürtellage
5b Gürtellage
5'aGürtellage
5'b Gürtellage
5'c Gürtellage
5'd Gürtellage
6 .Innenschicht
6' Innenschicht
14 . Endabschnitt,
14' Endabschnitt
15a Randabschnitt
15b Randabschnitt
15'b Randabschnitt
15'c Randabschnitt
17 Schneideeinrichtung
18 Walze
19 Mischungsbahn
19' Mischungsbahn
19" Mischungsbahn
19"' Mischungsbahn
19a Bahnstück
19"a Bahnstück
B Breite
B' Breite
a Länge
b Breite
c Breite
a' Länge
b' Breite
c' Breite
20 Mischungsstreifen
20' Mischungsstreifen
21 Randstreifen
21'Randstreifen
22 Kalander
22a Kalanderwalze
22b Kalanderwalze
22c Kalanderwalze
22d Kalanderwalze
23a Walzenspalt.
23b Walzenspalt
23c Walzenspalt
D₁ Pfeil

- D₂: Pfeil
- 21: Festigkeitsträgerbahn
- 25: Stahlkord
- 27: Schneideeinrichtung
- 29: Materialverbundbahn
- 29': Materialverbundbahn
- 35: Stahlkord
- 40: Materialverbund
- 40': Materialverbund
- 40b: mittlerer Abschnitt
- 40c: Randabschnitt
- 40'a: Materialverbundstück
- 40'b: mittlerer Abschnitt
- 40'c: Randabschnitt
- 41: Abschnitt
- 41': Abschnitt
- 49: Mischungsbahn
- 50: Mischungsstreifen
- 51: Mischungsstreifen

## Patentansprüche

1. Verfahren zur Herstellung eines Festigkeitsträger beinhaltenden Materialverbundes (40, 40') für eine Gürtellage (5a, 5b, 5'b, 5'c) oder eine Karkasslage (4, 4') eines Radialluftreifens, wobei zwei Mischungsbahnen (19', 19"') mit einer zwischen ihnen zu positionierenden Festigkeitsträgerbahn (24) durch Kalandrieren zusammengefügt werden,
**dadurch gekennzeichnet,**
**dass** eine Mischungsbahn (19, 19", 49) aus mehreren Mischungsstreifen (20, 20', 21, 21', 50, 51) erstellt wird, wobei zumindest einer der Mischungsstreifen (20, 20', 50) aus einer ersten Kautschukmischung und zumindest ein weiterer Mischungsstreifen (21, 21', 51) aus einer zweiten Kautschukmischung besteht, die Mischungsbahn (19, 19", 49) quer bzw. unter einem spitzen Winkel (α) zu ihrer Längserstreckung in gleich große Bahnstücke (19a, 19"a) geschnitten wird, die einzelnen Bahnstücke (19a, 19"a) derart stumpf aneinander gespleißt werden, dass ihre Schnittkanten die Längskanten der nun entstehenden Mischungsbahn (19', 19"') bilden, welche mit einer zweiten übereinstimmend ausgeführten Mischungsbahn (19', 19"') sowie der Festigkeitsträgerbahn (24) durch Kalandrieren derart verbunden wird, dass gleiche Kautschukmischungen aufeinander positioniert werden, wobei anschließend die gebildete Materialverbundbahn (29, 29') in gleichgroße Stücke (40a, 40'a) geschnitten wird, welche an ihren ungeschnittenen Kanten zu einer Bahn (40, 40') verbunden werden, in welcher die Mischungsstreifen (20, 20', 21, 21', 50, 51) wie in der ursprünglichen Mischungsbahn (19, 19', 49) verlaufen.

2. Verfahren nach Anspruch 1, **dadurch gekennzeichnet, dass** die Mischungsbahn mit zumindest einem Mischungsstreifen (51) aus einer dritten Kautschukmischung erstellt wird.

3. Verfahren nach Anspruch 1, **dadurch gekennzeichnet., dass** die Mischungsbahn (19, 19') aus einem mittleren Mischungsstreifen (20, 20') aus der ersten Kautschukmischung und zwei gleich breiten Randstreifen (21, 21') aus der zweiten Kautschukmischung erstellt wird.

4. Verfahren nach Anspruch 1 oder 2, **dadurch gekennzeichnet, dass** die Mischungsbahn (49) drei Mischungsstreifen (50) aus der ersten Kautschukmischung, zwischen welchen Mischungsstreifen (51) aus der dritten Kautschukmischung verlaufen, aufweist.

5. Verfahren nach Anspruch 4, **dadurch gekennzeichnet, dass** die Mischungsbahn zusätzlich zwei Randstreifen aus der zweiten Kautschukmischung aufweist.

6. Verfahren nach Anspruch 1, **dadurch gekennzeichnet, dass** die Mischungsstreifen (20, 20', 21, 21', 50, 51) aus extrudierten Kautschukmischungen erstellt werden.

## Claims

1. Method for producing a material composite (40, 40'), comprising reinforcing elements, for a belt ply (5a, 5b, 5'b, 5'c) or a carcass ply (4, 4') of a radial pneumatic tyre, two mixture webs (19', 19"') being joined together with a reinforcing element web (24), to be positioned between them, by calendering, **characterized in that** a mixture web (19, 19", 49) is created from a number of mixture strips (20, 20', 21, 21', 50, 51), at least one of the mixture strips (20, 20', 50) consisting of a first rubber mixture and at least one further mixture strip (21, 21', 51) consisting of a second rubber mixture, the mixture web (19, 19", 49) being cut transversely or at an acute angle (α) in relation to its longitudinal extent into pieces of web (19a, 19"a) of the same size, the individual pieces of web (19a, 19" a) being spliced so as to butt against one another, in such a way that their cut edges form the longitudinal edges of the thus created mixture web (19', 19"'), which is connected to a second, identically configured mixture web (19', 19"') and the reinforcing element web (24) by calendering in such a way that like rubber mixtures are positioned one on top of the other, the material composite web (29, 29') that is formed subsequently being cut into pieces (40a, 40'a) of the same size, which are connected at their uncut edges to form a web (40, 40'), in which the mixture strips (20, 20', 21, 21', 50, 51) run as in the original mixture web (19, 19', 49).

2. Method according to Claim 1, **characterized in that** the mixture web is created with at least one mixture strip (51) of a third rubber mixture.

3. Method according to Claim 1, **characterized in that** the mixture web (19, 19') is created from a middle mixture strip (20, 20') of the first rubber mixture and two bordering strips (21, 21') of the same width of the second rubber mixture.

4. Method according to Claim 1 or 2, **characterized in that** the mixture web (49) has three mixture strips (50) of the first rubber mixture, between which there run mixture strips (51) of the third rubber mixture.

5. Method according to Claim 4, **characterized in that** the mixture web additionally has two bordering strips of the second rubber mixture.

6. Method according to Claim 1, **characterized in that** the mixture strips (20, 20', 21, 21', 50, 51) are created from extruded rubber mixtures.

## Revendications

1. Procédé de fabrication d'un matériau composite (40, 40') contenant des renforts, prévu pour une couche de ceinture (5a, 5b, 5'b, 5'c) ou une couche de carcasse (4, 4') d'un bandage pneumatique radial pour roue de véhicule, dans lequel deux bandes de mélange (19', 19"') entre lesquelles est disposée une bande (24) de renforts à placer entre elles sont rassemblées par calendrage,
**caractérisé en ce que**
une bande de mélange (19, 19", 49) constituée de plusieurs rubans de mélange (20, 20', 21, 21', 50, 51) est formée, au moins l'un des rubans de mélange (20, 20', 50) étant constitué d'un premier mélange de caoutchouc et au moins un autre ruban de mélange (21, 21', 51) étant constitué d'un deuxième mélange de caoutchouc,
**en ce que** la bande de mélange (19, 19", 49) est découpée transversalement ou suivant un angle (α) aigu par rapport à son extension longitudinale en morceaux (19a, 19"a) de bande de même taille,
**en ce que** les différents morceaux (19a, 19" a) de bandes sont assemblés bout à bout de telle sorte que leurs bords de coupe forment les bords longitudinaux de la bande de mélange (19', 19"') ainsi formée, qui est reliée par calendrage à une deuxième bande de mélange (19', 19"') réalisée de manière correspondante ainsi qu'à la bande (24) de renforts de telle sorte que les mélanges de caoutchouc identiques soient placés l'un au-dessus de l'autre,
**en ce que** la bande (29, 29') de matériau ainsi formée est ensuite découpée en morceaux (40a, 40'a) de même taille qui sont assemblés par leurs bords non découpés en une bande (40, 40') dans laquelle les rubans de mélange (20, 20', 21, 21', 50, 51) s'étendent de la même manière que dans leur bande de mélange (19, 19', 49) initiale.

2. Procédé selon la revendication 1, **caractérisé en ce que** la bande de mélange est formée avec au moins un ruban de mélange (51) en un troisième mélange de caoutchouc.

3. Procédé selon la revendication 1, **caractérisé en ce que** la bande de mélange (19, 19') est formée d'un ruban central de mélange (20, 20') du premier mélange de caoutchouc et de deux rubans de bordure (21, 21') de même largeur du deuxième mélange de caoutchouc.

4. Procédé selon les revendications 1 ou 2, **caractérisé en ce que** la bande de mélange (49) présente trois rubans de mélange (50) du premier mélange de caoutchouc entre lesquels s'étendent des rubans de mélange (51) du troisième mélange de caoutchouc.

5. Procédé selon la revendication 4, **caractérisé en ce que** la bande de mélange présente de plus deux rubans de bordure du deuxième mélange de caoutchouc.

6. Procédé selon la revendication 1, **caractérisé en ce que** les rubans de mélange (20, 20', 21, 21', 50, 51) sont formés de mélanges de caoutchoucs extrudés.
